# EUROPÄISCHE PATENTSCHRIFT

(11) **EP 3 718 728 B1**
(45) Veröffentlichungstag und Bekanntmachung des Hinweises auf die Patenterteilung: **15.03.2023**
(21) Anmeldenummer: 20163315.3
(22) Anmeldetag: 16.03.2020
(51) Int. Cl.: B29C 37/00, G01N 21/89, G01N 21/958, B65H 43/08, B41F 33/00, G01N 21/896, G01N 21/93, B29L 7/00, G01N 21/86

(54) **BAHNBEOBACHTUNGSSYSTEM UND VERFAHREN ZUR BAHNBEOBACHTUNG**
TRACK OBSERVATION SYSTEM AND METHOD FOR OBSERVING A TRACK
SYSTÈME DE SURVEILLANCE DE BANDE ET PROCÉDÉ DE SURVEILLANCE DE BANDE

(30) Priorität: 15.03.2019 DE 102019106702
(43) Veröffentlichungstag der Anmeldung: 07.10.2020
(73) Patentinhaber: Chromasens GmbH, 78467 Konstanz (DE)
(72) Erfinder: FREI, Bernhard, 78465 Konstanz (DE); SULGER, Patrick, 78464 Konstanz (DE); HOPFAUF, Dimitri, 78224 Singen (DE); WEBER, Rolf, 78467 Konstanz (DE)
(74) Vertreter: HGF

(56) Entgegenhaltungen:
- WO-A1-00/04374
- US-A- 4 319 847
- US-A- 5 047 652

## Beschreibung

Die vorliegende Erfindung betrifft ein Bahnbeobachtungssystem. Außerdem betrifft die Erfindung ein Verfahren zur Bahnbeobachtung.

Bahnförmige Materialien oder kurz Bahnmaterialien, wie beispielsweise Folien, Papiere und ähnliches, werden in vielen Bereichen typischerweise in kontinuierlichen Verfahren hergestellt und auch verarbeitet. Als Beispiele mögen hier Druckmaschinen, Schneidemaschinen oder auch Stanzmaschinen dienen. In vielen Fällen ist es üblich, das Bahnmaterial mittels elektronischer Kameras oder Kamerasysteme eines sogenannten Bahnbeobachtungssystems und entsprechender Verfahrensweisen zu überwachen, um Qualitätsunterschiede und Mängel, aber auch Beschädigungen und Fehler idealerweise automatisiert erkennen zu können.

Aus der DE 200 22 748 U1 geht bspw. ein System zum Überwachen eines Bahnmaterials hervor. Es ist ein Passerregelungssystem, bei dem Passermarken auf dem Bahnmaterial erfasst und zur Steuerung der Maschine verwendet werden.

Die DE 20 2013 102 069 U1 offenbart eine Farbmessvorrichtung für Messungen an zu bedruckenden endlosen Bahnen. Dabei werden Farbinformationen der bedruckten Bahn erfasst und ausgewertet, um Informationen über deren Transport und Beschaffenheit zu erhalten. Eine Hintergrundwalze dient zur Sicherstellung eines homogenen und neutralen Hintergrunds, um somit definierte Farbwerte des Drucks erfassen zu können.

Aus der EP 0 987 205 B1 geht ein Schlaufenpuffer für Bahnmaterial hervor, der dazu dient, Bahnmaterial beispielsweise zum Ausgleich unterschiedlicher Bahngeschwindigkeiten zwischenzuspeichern. Eine Kamera dient zur Erfassung der Lage von Materialbahnen in der Speichereinrichtung mit einem Förderband, das auch als nicht näher spezifizierter Hintergrund dient.

In der WO 00/04 374 A1 ist ein Messsystem für bewegte Gewebebahnen beschrieben. Das Gewebe wird mittels einer Strahlungsquelle beleuchtet, und die Reflexion des Gewebes selber beziehungsweise einer darunterliegenden bekannten Transportbahn wird erfasst. Letztere dient dabei auch als Hintergrund.

Die DE 10 2016 103 070 A1 und die DE 10 2016 119 292 A1 betreffen jeweils Inspektionssysteme für Materialbahnen, wobei sowohl eine Durchlichtfunktion als auch ein Datenverarbeitungssystem beschrieben sind.

Die US 4,319,847 beschreibt eine Vorrichtung zum Messen bestimmter ausgewählter Eigenschaften einer bewegten Bahn. Hierbei ist eine Strahlungsquelle, die elektromagnetische Strahlung gegen die Bahn emittiert, zum Vermessen der Bahn parallel zu dieser angeordnet, ebenso wie auf der anderen Seite der Bahn ein Abstandshalter, der zusammen mit Luftdüsen der Strahlungsquelle für einen konstanten Abstand zur Bahn sorgt. Die Reflektion der Strahlung an der Bahn wird von einem Kollektor gesammelt und ausgewertet.

Als Kamera beziehungsweise Kamerasystem dienen dabei in Bahnbeobachtungssystemen oftmals einzelne Zeilenkameras oder Kombinationen mehrerer Zeilenkameras, die direkt aneinanderstoßende oder auch leicht überlappende Bildfenster aufweisen.

Transparente oder zumindest teiltransparente Bahnmaterialien, in der Regel also Folien, lassen sich dabei besonders gut in Durchsicht beobachten. Dabei wird ein Hintergrund aus Kamerasicht hinter dem Bahnmaterial angeordnet, so dass die Kamera das Material im Durchlicht beobachtet, also den Zustand der gesamten Dicke des Materials beobachten kann.

Als Hintergrund werden in der Regel ebene und/oder einfarbige beziehungsweise homogen eingefärbte Oberflächen verwendet. Bei kontinuierlicher oder zumindest quasi-kontinuierlicher Beobachtung können auf diese Weise sowohl lokale Farbabweichungen wie auch Beschädigungen des Bahnmaterials erkannt werden. Zur Kalibrierung, insbesondere Farbkalibrierung der Kamera kann dabei der Hintergrund auch gegen einen mit Referenzfarbflächen gemusterten oder eingefärbten Hintergrund ausgetauscht werden. In der Regel ist im Bereich der Kamera noch eine Lichtquelle zur möglichst homogenen Ausleuchtung des Beobachtungsbereichs angeordnet.

Als nachteilig hat sich bei den bekannten Systemen erwiesen, dass bei den sicherheitshalber einzustellenden Abständen nur eine verhältnismäßig geringe Bildqualität erreicht werden kann. Für eine gute Bildqualität muss nämlich der Hintergrund möglichst nahe unterhalb der Bahn angeordnet sein. Um allerdings Beschädigungen der Bahn wie auch Abrieb auf dem Hintergrund zu vermeiden, ist ein großzügiger Abstand zur Bahn einzustellen, so dass diese bei üblichen Bewegungen der Bahn den Hintergrund nicht berührt, um für Stillstand und Kosten sorgende Beschädigungen und Abrieb zu vermeiden.

Der Erfindung liegt daher die Aufgabe zugrunde, die beschriebenen Nachteile zu überwinden und das Bahnbeobachtungssystem wie auch ein entsprechendes Verfahren zu verbessern.

Insbesondere soll die Bildqualität bei gleicher oder geringerer Ausfallwahrscheinlichkeit gesteigert, wie auch die Wartungsfreundlichkeit erhöht werden.

Die Aufgabe wird durch die Gegenstände der unabhängigen Ansprüche gelöst. Vorteilhafte Weiterbildungen und bevorzugte Ausführungsformen bilden den Gegenstand der Unteransprüche.

Ein erfindungsgemäßes Bahnbeobachtungssystem dient zur kontinuierlichen oder quasi-kontinuierlichen optischen Erfassung eines durchlaufenden transparenten oder teiltransparenten Bahnmaterials. Dabei ist wenigstens eine Kamera, vorzugsweise eine Zeilenkamera, zur abschnittsweisen optischen Erfassung des relativ zur Kamera bewegten Bahnmaterials vorgesehen. Das Bahnmaterial ist zur kalibrierbaren optischen Erfassung vor einem definierten Hintergrund angeordnet. Es arbeitet insbesondere im Auflichtbetrieb. Das erfindungsgemäße Bahnbeobachtungssystem zeichnet sich dadurch aus, dass der Hintergrund mit Abstand zum Bahnmaterial angeordnet und in Längsrichtung des Bahnmaterials mit derselben Bewegungsrichtung von Bahnmaterial (11) und Hintergrund bewegbar ausgebildet ist.

Ein bewegter Hintergrund kann bereits die Bildqualität aufgrund der zeitlichen Auflösung der Kamera verbessern. Abrieb oder Beschädigungen bei ungewolltem Kontakt können gegebenenfalls reduziert werden, da durch die gleichartige Bewegung des Bahnmaterials und des Hintergrunds die Reibung zwischen diesen Gegenständen minimiert wird.

Die Anordnung des Hintergrundes mit Abstand zum Bahnmaterial bewirkt einerseits, dass das Bahnmaterial den Hintergrund nicht berührt und das Bahnmaterials nicht beschädigt wird. Zudem wird eine Verschmutzung des Bahnmaterials vermieden.

Die Bilderfassung und Bildqualität werden aufgrund des mit der Bahn mitbewegten Hintergrunds weiter verbessert.

Der Hintergrund ist vorzugsweise mit ähnlicher oder derselben Geschwindigkeit wie das Bahnmaterial bewegbar. Auf diese Weise reduzieren sich eventuelle negative Effekte bei unerwünschten Kontakten zwischen Bahn und Hintergrund deutlich. Folglich kann auch der Abstand des Hintergrunds zur Bahn weiter reduziert werden, um die Bildqualität zu erhöhen.

Vorzugsweise ist der Hintergrund als homogene Fläche ausgebildet und/oder homogen eingefärbt. Besonders bevorzugt handelt es sich um eine weiße und/oder matte Farbgebung. Damit kann eine optimale Farbwiedergabe wie auch Bildqualität erreicht werden.

Der Hintergrund weist vorzugsweise eine strukturierte Oberfläche zum Erzeugen eines diffusen Lichtes auf. Hierzu ist die Oberfläche rau, d.h. dreidimensional strukturiert. Die Struktur ist derart ausgebildet, dass Licht, welches auf die strukturierte Oberfläche trifft, in unterschiedlichste Richtungen und damit diffus reflektiert wird. Eine glatte Oberfläche würde hingegen glänzen und unerwünschte Lichtreflexe erzeugen. Eine strukturierte Oberfläche kann bei einem Bahnbeobachtungssystem mit einer Zeilenkamera und starrem Hintergrund zu Streifenbildung führen. Durch Aneinanderfügen der eindimensionalen Aufnahmen der Zeilenkamera zu einem zweidimensionalen Bild wäre bei einem starren Hintergrund die Struktur bei jeder Aufnahme die gleiche, wodurch statt einer diffusen Lichtverteilung eine streifenförmige Lichtverteilung entstehen würde. Dies könnte eine Untersuchung des Bahnmaterials erheblich beeinträchtigen. Bei einer bewegten strukturierten Oberfläche hingegen wird das Licht bei jeder Aufnahme anders gestreut, so dass beim Aneinanderfügen der eindimensionalen Aufnahmen ein diffus ausgeleuchtetes Bild entsteht.

Der Hintergrund weist insbesondere eine in Bewegungsrichtung geschlossene Oberfläche auf. Es handelt sich bevorzugt um eine umlaufende oder rotierbare Oberfläche. Dadurch kann auf einfache Weise eine kontinuierliche Bewegung des Hintergrunds erreicht werden.

Als Hintergrund ist bevorzugt die Oberfläche einer Hintergrundwalze, insbesondere einer zylindrischen Hintergrundwalze, vorgesehen. Im Ergebnis wird eine Walze beziehungsweise Hintergrundwalze als bewegbarer Hintergrund verwendet. Diese kann auf einfache Weise rotiert werden.

Vorzugsweise ist zur Bewegung des Hintergrunds ein Antrieb vorgesehen. Damit lässt sich der Hintergrund gezielt in gewünschter Weise bewegen, so dass eine optimale Bildqualität erreicht werden kann.

Weiter bevorzugt ist eine Kopplung der Bewegung des Hintergrunds mit der Bewegung des Bahnmaterials vorgesehen. Vorzugsweise erfolgt dies in Form einer mechanischen Kopplung, wie insbesondere einer Riemenkopplung oder mittels eines Riementriebs. Hierzu kann beispielsweise eine Rolle oder Walze mit Kontakt zur Bahn für den Antrieb sorgen, die auf den Hintergrund übertragen werden kann. Eine solche Walze kann auch als Antriebswalze bezeichnet werden. Alternativ kann dazu auch ein steuerbarer und separater motorischer Antrieb vorgesehen sein. Dann sollte der motorische Antrieb zur Anpassung an die gewünschte Bewegung des Hintergrunds steuerbar und an die Bewegung der Bahn anpassbar sein. In jedem Fall ist eine Kopplung beziehungsweise Anpassung sinnvoll, um eine einfachen und sicheren Betrieb zu erreichen. Die Lösung mit motorischem Antrieb ist jedoch steuerungstechnisch deutlich aufwändiger als ein mechanischer Antrieb.

Die Bahngeschwindigkeit des Hintergrundes ist bevorzugt an die Bahngeschwindigkeit des Bahnmaterials angepasst. Weiter bevorzugt stimmt sie mit dieser zumindest nahezu überein oder ist identisch. Bei zumindest nahezu gleicher Bahngeschwindigkeit entfallen folglich praktisch jegliche Beschädigungen oder Abriebe durch Kontakte zwischen Bahn und Hintergrund oder werden zumindest minimiert. Auf diese Weise kann der Abstand zwischen Bahn und Hintergrund minimiert und damit auch die Bildqualität optimiert werden, da diese vor allem bei Zeilenkameras mit zunehmendem Abstand abnimmt.

Das Bahnbeobachtungssystem weist vorzugsweise ein Auflicht auf, welches das Bahnmaterial beleuchtet, wobei die Lichtquelle für das Auflicht auf derselben Seite des Bahnmaterials wie die Kamera angeordnet ist. Mit dem Auflicht wird das Bahnmaterial in der Art und Weise beleuchtet, wie es bei der Prüfung in professionellen Druckgeräten üblich ist. Daher sind die so erzielten Farbmessungen mit herkömmlichen Test vergleichbar.

Als Alternative könnte auch ein Durchlicht verwendet werden, bei welchem die Lichtquelle auf der von der Kamera abgewandten Seite angeordnet ist.

Der Hintergrund kann insbesondere zu Kalibrierzwecken als gemusterten Hintergrund ausgebildet sein, vorzugsweise mit einem vordefinierten Muster.

Im Falle von Beschädigungen kann der Hintergrund ersetzt werden. Durch eine möglichst einfache Wechseltechnik, beispielsweise einen einfachen Austausch einer Hintergrundwalze, lassen sich Betriebs- und Umrüstkosten wie auch die entsprechenden Zeiten minimieren. Vorzugsweise ist der Hintergrund, insbesondere die Hintergrundwalze, vom Bahnmaterial mit geringem Spaltmaß beziehungsweise Abstand beabstandet. Das Spaltmaß beziehungsweise der Abstand beträgt dabei vorzugsweise weniger als 10 mm, weiter vorzugsweise weniger als 1 mm, besonders bevorzugt in etwa zwischen 0,3 mm und 0,5 mm. Derart geringe Abstände können nur durch eine erfindungsgemäße Bewegung des Hintergrundes erreicht werden. Bei diesen geringen Abständen lassen sich kurzzeitige Berührungen zwischen Bahnmaterial und Hintergrund nicht verhindern. Würde der Hintergrund unbewegt sein, würde zwischen Bahnmaterial und Hintergrund eine starke Reibung entstehen, die zur Beschädigung des Bahnmaterials und/oder des Hintergrund führen kann. Durch die Bewegung des Hintergrundes wird die Reibung bei Berührung minimiert, wodurch auch die Möglichkeit einer eventuellen Beschädigung gering ist.

Die eingangs geschilderte Aufgabe wird außerdem gelöst durch ein erfindungsgemäßes Verfahren zur Bahnbeobachtung eines durchlaufenden transparenten oder teiltransparenten Bahnmaterials mittels kontinuierlicher oder quasi-kontinuierlicher optischer Erfassung. Mittels wenigstens einer Kamera, vorzugsweise einer Zeilenkamera, wird das relativ zur Kamera bewegte Bahnmaterials optisch erfasst. Das Bahnmaterial wird außerdem zur kalibrierbaren optischen Erfassung vor einem definierten Hintergrund erfasst. Das Verfahren zeichnet sich dadurch aus, dass der Hintergrund in Längsrichtung des Bahnmaterials bewegt wird. Durch Bewegung von Bahnmaterial und Hintergrund in dieselbe Bewegungsrichtung kann eine erhebliche Verbesserung der Bildqualität erreicht werden.

Bevorzugt wird die Geschwindigkeit und/oder Bewegungsrichtung des Hintergrunds an die Geschwindigkeit und/oder Bewegungsrichtung des Bahnmaterials angepasst. Weiter vorzugsweise wird sie an diese gekoppelt oder mit dieser synchronisiert. Damit werden eventuelle negative Effekte bei unerwünschten Kontakten zwischen Bahn und Hintergrund deutlich reduziert. Folglich kann auch der Abstand des Hintergrunds zur Bahn weiter reduziert werden, um die Bildqualität zu erhöhen.

Der Hintergrund ist vorzugsweise als geschlossene Fläche, vorzugsweise als Zylinderoberfläche, ausgebildet, wobei dieser mit dem Bahnmaterial mitbewegt wird. Als Hintergrund wird dabei weiter vorzugsweise eine zylinderförmige Hintergrundwalze um ihre Längsachse rotiert. Damit kann in beiden Fällen auf einfache Weise die Bewegung des Hintergrunds zusammen mit der Bahn erreicht werden. Eine kontinuierliche Bewegung des Hintergrunds wird damit auf einfache Weise erreicht.

Der Hintergrund, vorzugsweise die Hintergrundwalze, wird vorzugsweise vom Bahnmaterial mitbewegt beziehungsweise angetrieben. Insbesondere wird dies über eine mechanische Kopplung, vorzugsweise mittels Riemenkopplung oder Riementrieb, erreicht. Bevorzugt wird dazu eine vom Bahnmaterial mitbewegte Walze oder ein elektronisch mit dem Bahnmaterial synchronisierter motorischer Antrieb verwendet. Damit kann ein sicherer und stabiler Betrieb des mitbewegten Hintergrunds erreicht werden.

Im Übrigen kann der Hintergrund oder eine Hintergrundwalze gegen einen anderen Hintergrund oder eine Hintergrundwalze ausgetauscht werden. Dies dient vorzugsweise zur Farbkalibrierung und/oder zur Beseitigung von Verschmutzungen des Hintergrunds. Besonders einfach ist dies mit einer Hintergrundwalze möglich, da sich diese idealerweise einfach austauschen lässt. Auch eine Kalibrierungswalze oder ein Kalibrierungszylinder lässt sich so auf einfache Weise einsetzen. Mit einer nur teilbelegten Kalibrierungswalze können sowohl Shadingdaten als auch Kalibrierungsdaten in einem Messvorgang ermittelt werden.

Ein bevorzugtes Ausführungsbeispiel der Erfindung wird im Folgenden anhand der Zeichnung näher beschrieben. In dieser zeigen:
- Fig.1: eine Draufsicht auf ein erfindungsgemäßes Bahnbeobachtungssystem, und
- Fig. 2: eine Seitenansicht zur Fig. 1.

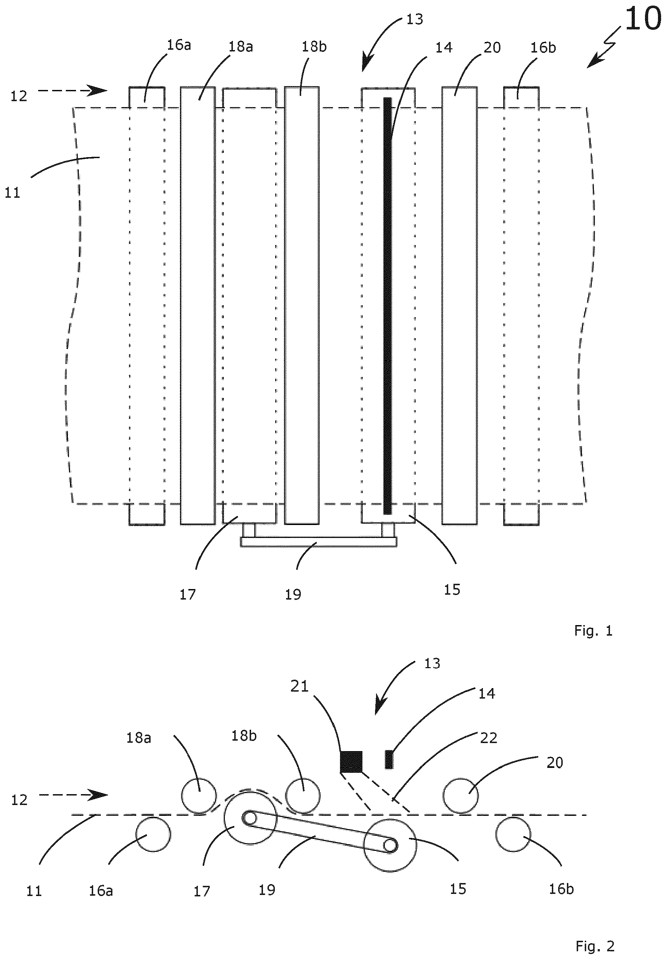

In der Fig. 1 ist ein Ausschnitt einer Maschine 10 zur Handhabung von Bahnmaterial 11 in einer Draufsicht dargestellt. Es kann sich beispielsweise um eine Druckmaschine, Schneidemaschine oder auch Stanzmaschine handeln. Die Fig. 2 zeigt dieselbe Maschine 10 in einer Seitenansicht, in der der Bahnverlauf des Bahnmaterials 11 und die Anordnung der übrigen Komponenten besser erkennbar sind.

Es ist nur ein mit gestrichelten Umrissen skizzierter Abschnitt des praktisch kontinuierlich durch die Maschine 10 laufenden Bahnmaterials 11 gezeigt. Die Bewegungsrichtung 12 des Bahnmaterials 11 durch die Maschine 10 (hier von links nach rechts in der Blattebene) ist ebenfalls mit gestrichelten Pfeilen angedeutet. Bei dem Material 11 kann es sich beispielsweise um eine teiltransparente oder transparente Folie handeln.

Teil der exemplarisch gezeigten Maschine 10 ist auch ein erfindungsgemäßes Bahnbeobachtungssystem 13. Dieses umfasst zwar typischerweise wie auch im vorliegenden Fall eine ganze Reihe von Komponenten. Die wichtigsten Bestandteile sind aber einerseits ein Kamerasystem 14 und andererseits eine Hintergrundwalze 15. Diese dienen erfindungsgemäß dazu, die entsprechenden Vorteile zu erreichen.

Das Kamerasystem 14 ist dabei als Zeilenkamera ausgebildet. Es erstreckt sich zur Beobachtung der gesamten Bahn 11 entsprechend über die komplette Breite des Bahnmaterials 11. Da es sich um eine Zeilenkamera handelt, ist diese zur Erhöhung von Bildqualität und Auflösung nur mit geringem Abstand oberhalb der Bahn 11 angeordnet, wie insbesondere in Fig. 2 gut zu erkennen ist. Die Zeilenkamera kann mit einer Linse bzw. einem Objektiv versehen sein.

Neben der Kamera 14 ist eine Lichtquelle 21 für ein Auflicht 22 vorgesehen, welches das Bahnmaterial 11 beleuchtet. Die Lichtquelle 21 ist hierbei so ausgebildet, dass die gesamte Zeile, welche von der Zeilenkamera erfasst wird, gleichmäßig beleuchtet wird. Die Lichtquelle 21 kann beispielsweise als LED-Zeile mit mindestens der Breite der Bahn 11 ausgebildet sein. Schmalere Lichtquellen 21 sind jedoch auch denkbar.

In Blickrichtung der Kamera 14 nach unten ist unterhalb des Bahnmaterials 11 eine Hintergrundwalze 15 angeordnet. Diese dient als Hintergrund für die Bildaufnahme mittels des Kamerasystems 14, die durch das Bahnmaterial 11 hindurch erfolgt.

Die Hintergrundwalze 15 ist dazu im normalen Betrieb typischerweise mit einer strukturierten, homogen eingefärbten Oberfläche versehen. Im Regelfall handelt es sich um eine weiße matte beziehungsweise diffuse Oberfläche. Damit können Reflexe verhindert werden. Diese ermöglicht eine optimale Farbwiedergabe bei der optischen Beobachtung mit der Kamera 14.

Das Bahnmaterial 11 verläuft im gezeigten Beispiel durch mehrere Walzen. Es handelt sich zunächst jeweils seitlich um zwei Stützwalzen 16a und 16b. Diese dienen dazu, die Bahn 11 vor und nach dem Passieren des Beobachtungssystems 13 abzustützen.

Die Hintergrundwalze 15 wird indirekt durch die Bahn 11 angetrieben. Dazu dient eine an der Bahn 11 anliegende Antriebswalze 17. Diese wird zunächst vom Bahnmaterial 11 angetrieben, das teilweise um diese geschlungen ist. Hierzu sind zwei Gegenwalzen 18a und 18b links und rechts der Antriebswalze 17 angeordnet. Diese Gegenwalzen 18a und 18b legen das Bahnmaterial 11 in einer einfachen Schleife um die Antriebswalze 17 herum. Das sich während des Betriebs in Bewegungsrichtung 12 durch die Maschine 10 transportierte Bahnmaterial 11 treibt damit die Antriebswalze 17 gerade mit der Bahngeschwindigkeit der Bahn 11 an.

Die Antriebswalze 17 überträgt ihre Drehbewegung mittels eines Riementriebs 19 auf die Hintergrundwalze 15. Im vorliegenden Fall weisen die beiden Walzen 15 und 17 denselben Durchmesser auf. Eine 1:1 Übersetzung des Riementriebs 19 sorgt damit dafür, dass die beiden Walzen 15 und 17 sich mit der gleichen Umdrehungsgeschwindigkeit drehen. Folglich wird die Hintergrundwalze 15 entsprechend der aktuellen Bahngeschwindigkeit des Bahnmaterials 11 angetrieben. Die Oberfläche der Hintergrundwalze 15 bewegt sich also mit derselben Geschwindigkeit wie die Bahn 11.

Schließlich ist noch eine Gegenwalze 20 gezeigt, die exemplarisch dazu dienen soll, das Bahnmaterial 11 im Bereich der Hintergrundwalze 15 und der Kamera 14 möglichst ruhig durch den schmalen Spalt zwischen Kamera 14 und Walze 15 zu führen.

Tatsächlich sorgt die aufgrund ihrer Rotation mit der Bahn 11 mitbewegte Hintergrundwalze 15 dafür, dass sich der Abstand zwischen Walze 15 und Bahnmaterial 11 verringern lässt. Typischerweise sind es etwa 0,3 mm bis 0,6 mm als Abstand zwischen diesen beiden. Damit kann die Bildqualität erheblich gegenüber dem Stand der Technik erhöht werden.

Das erfindungsgemäße Verfahren wird im Folgenden exemplarisch beschrieben:
Das Bahnmaterial 11 wird durch die Maschine 10 bewegt. Dabei wird die Antriebswalze 17 durch das mittels der Gegenwalzen 18a und 18b um diese geschlungene Bahnmaterial 11 angetrieben. Die Hintergrundwalze 15 wird dann durch den Riementrieb 19 mit der Umdrehungsgeschwindigkeit der Antriebswalze 17 angetrieben.

Alternativ könnte auch ein motorischer Antrieb der Hintergrundwalze 15 erfolgen. Dazu wäre die aktuelle Bahngeschwindigkeit des Bahnmaterials 11 möglichst kontinuierliche zu ermitteln und dann die Hintergrundwalze 15 entsprechend anzutreiben. Ein solcher bahnsynchroner Antrieb ist jedoch mit erheblichem Mehraufwand verbunden, so dass ein Antrieb mittels Riementrieb 19 zur Vereinfachung insbesondere steuerungstechnisch deutlich einfacher aufgebaut ist.

Die Hintergrundwalze 15 kann zu Kalibrierungszwecken vom Kamerasystem 14 sowohl mit als auch ohne Bahnmaterial 11 aufgenommen werden. Dabei werden im Idealfall die Helligkeitswerte und Farbwerte der Walze 15 bei einer vollen Umdrehung ermittelt. Diese sogenannten Shadingdaten dienen als Grundlage für die spätere Bildanalyse und Auswertung im Betrieb mit durchlaufendem Bahnmaterial 11.

Falls die Hintergrundwalze 15 eine Verschmutzung oder eine Beschädigung aufweist, kann dies ebenfalls mittels der Kamera 14 ermittelt werden. Eine entsprechende Verschmutzung auf der Hintergrundwalze 15 wird nämlich regelmäßig bei jeder Umdrehung der Walze 15 festgestellt werden.

Als eine Lösungsmöglichkeit können kleine unwesentliche Verschmutzungen gegebenenfalls ignoriert werden, beispielsweise durch computergestütztes Ausblenden. Als andere Lösungsmöglichkeit kann die Walze 15 gelegentlich gegen ein einwandfreies Exemplar ausgetauscht werden. Eine verschmutzte Hintergrundwalze 15 kann dann auf einfache Weise außerhalb der Maschine 10 gereinigt werden.

Die Hintergrundwalze 15 kann auch gegen eine mit Symbolen, Strukturierungen und/oder Mustern ausgerüstete Kalibrierungswalze beziehungsweise Kalibrierzylinder ausgetauscht werden, die hier nicht dargestellt ist. Damit kann insbesondere eine Farbkalibrierung erfolgen, die für eine Erkennung von Farbabweichungen zusätzlich zur Erkennung von Löchern und Fehlstellen erforderlich ist.

Die Kalibrierwalze ist typischerweise nicht vollständig mit Kalibrierbelegen versehen. Freie Bereiche der Kalibrierwalze können dann dazu genutzt werden, die sogenannten Shadingdaten herzuleiten. Im Ergebnis können damit also sowohl Shadingaufnahmen und Kalibrieraufnahmen beziehungsweise die daraus abgeleiteten entsprechenden Daten in einer Messung zur Kalibrierung ermittelt werden. Hierzu ist der Drehgeber so angeordnet, dass er auch bei manueller Drehung der Kalibrierwalze einsetzbar ist. Dazu ist ein entsprechender Drehgeber vorzugsweise mit der Achse der Hintergrundwalze 15 beziehungsweise Kalibrierwalze gekoppelt.

### Bezugszeichenliste

- 10: Maschine
- 11: Bahnmaterial
- 12: Bewegungsrichtung
- 13: Bahnbeobachtungssystem
- 14: Kamerasystem
- 15: Hintergrundwalze
- 16a: Stützwalze
- 16b: Stützwalze
- 17: Antriebswalze
- 18a: Gegenwalze
- 18b: Gegenwalze
- 19: Riementrieb
- 20: Gegenwalze
- 21: Lichtquelle
- 22: Auflicht

## Patentansprüche

1. Bahnbeobachtungssystem zur kontinuierlichen oder quasi-kontinuierlichen optischen Erfassung eines durchlaufenden transparenten oder teiltransparenten Bahnmaterials (11), wobei wenigstens eine Kamera (14), vorzugsweise eine Zeilenkamera, zur abschnittsweisen optischen Erfassung des relativ zur Kamera bewegten Bahnmaterials (11) dient und wobei das Bahnmaterial (11) zur kalibrierten optischen Erfassung vor einem definierten Hintergrund angeordnet ist, wobei der Hintergrund mit Abstand zum Bahnmaterial (11) angeordnet und in Längsrichtung des Bahnmaterials (11) bewegbar ausgebildet ist.

2. Bahnbeobachtungssystem nach Anspruch 1, **dadurch gekennzeichnet, dass** der Hintergrund mit ähnlicher oder derselben Geschwindigkeit wie das Bahnmaterial (11) bewegbar ist.

3. Bahnbeobachtungssystem nach einem der vorhergehenden Ansprüche, **dadurch gekennzeichnet, dass** der Hintergrund als homogene Fläche ausgebildet ist und/oder homogen eingefärbt ist, vorzugsweise in weißer Farbe.

4. Bahnbeobachtungssystem nach Anspruch 1, **dadurch gekennzeichnet, dass** der Hintergrund eine strukturierte Oberfläche aufweist.

5. Bahnbeobachtungssystem nach einem der vorhergehenden Ansprüche, **dadurch gekennzeichnet, dass** der Hintergrund eine in Bewegungsrichtung (12) geschlossene Oberfläche aufweist, vorzugsweise eine umlaufende oder rotierbare Oberfläche.

6. Bahnbeobachtungssystem nach einem der vorhergehenden Ansprüche, **dadurch gekennzeichnet, dass** die Oberfläche einer Hintergrundwalze (15), insbesondere einer zylindrischen Hintergrundwalze, als Hintergrund vorgesehen ist.

7. Bahnbeobachtungssystem nach einem der vorhergehenden Ansprüche, **dadurch gekennzeichnet, dass** zur Bewegung des Hintergrunds ein Antrieb vorgesehen ist.

8. Bahnbeobachtungssystem nach einem der vorhergehenden Ansprüche, **dadurch gekennzeichnet, dass** eine Kopplung der Bewegung des Hintergrunds mit der Bewegung des Bahnmaterials (11) vorgesehen ist, vorzugsweise in Form einer mechanischen Kopplung, wie insbesondere einer Riemenkopplung oder eines Riementriebs (19), oder in Form eines steuerbaren separaten motorischen Antriebs, wobei vorzugsweise die Bahngeschwindigkeit des Hintergrundes an die Bahngeschwindigkeit des Bahnmaterials (11) angepasst ist, vorzugsweise mit dieser zumindest nahezu übereinstimmt.

9. Bahnbeobachtungssystem nach einem der vorhergehenden Ansprüche, **dadurch gekennzeichnet, dass** das Beleuchtungssystem eine Lichtquelle (21) für ein Auflicht (22) aufweist, welche zur Beleuchtung des Bahnmaterials (11) angeordnet ist.

10. Bahnbeobachtungssystem nach einem der vorhergehenden Ansprüche, **dadurch gekennzeichnet, dass** der Hintergrund insbesondere zu Kalibrierzwecken mit Referenzfarbflächen gemustert oder eingefärbt ist, vorzugsweise mit vordefinierten Mustern ausgebildet ist.

11. Bahnbeobachtungssystem nach einem der vorhergehenden Ansprüche, **dadurch gekennzeichnet, dass** der Hintergrund, insbesondere die Hintergrundwalze, vom Bahnmaterial (11) mit geringem Spaltmaß beabstandet ist, insbesondere mit einem Spaltmaß von weniger als 10 mm, weiter vorzugsweise weniger als 1 mm, besonders bevorzugt in etwa zwischen 0,3 mm und 0,5 mm.

12. Verfahren zur Bahnbeobachtung eines durchlaufenden transparenten oder teiltransparenten Bahnmaterials (11) mittels kontinuierlicher oder quasi-kontinuierlicher optischer Erfassung, wobei mittels wenigstens einer Kamera (14), vorzugsweise einer Zeilenkamera, das relativ zur Kamera (14) bewegte Bahnmaterials (11) optisch erfasst wird und wobei das Bahnmaterial (11) zur kalibrierbaren optischen Erfassung vor einem definierten und in einem Abstand zum Bahnmaterial (11) befindlichen Hintergrund erfasst wird, wobei der Hintergrund in Längsrichtung des Bahnmaterials (11) bewegt wird.

13. Verfahren zur Bahnbeobachtung nach Anspruch 12, **dadurch gekennzeichnet, dass** die Geschwindigkeit und/oder Bewegungsrichtung des Hintergrunds an die Geschwindigkeit und/oder Bewegungsrichtung des Bahnmaterials (11) angepasst wird, vorzugsweise an diese gekoppelt oder mit dieser synchronisiert wird.

14. Verfahren zur Bahnbeobachtung nach Anspruch 12 oder 13, **dadurch gekennzeichnet, dass** der als geschlossene Fläche, vorzugsweise als Zylinderoberfläche, ausgebildete Hintergrund mit dem Bahnmaterial (11) mitbewegt wird, und/oder dass als Hintergrund eine zylinderförmige Hintergrundwalze (15) um ihre Längsachse rotiert wird.

15. Verfahren zur Bahnbeobachtung nach einem der Ansprüche 12 bis 14, **dadurch gekennzeichnet, dass** der Hintergrund, vorzugsweise die Hintergrundwalze, vom Bahnmaterial (11) mitbewegt wird, insbesondere über eine mechanische Kopplung, vorzugsweise Riemenkopplung oder eines Riementriebs (19), mit einer vom Bahnmaterial (11) mitbewegten Antriebswalze (17) oder einen mit dem Bahnmaterial (11) synchronisierten motorischen Antrieb.

## Claims

1. A web observation system for the continuous or quasi-continuous optical detection of a transparent or partially transparent web material (11) passing through, at least one camera (14), preferably a line scan camera, being used for the sectional optical detection of the web material (11) moved relative to the camera, and the web material (11) being arranged in front of a defined background for the purpose of calibrated optical detection, wherein the background is arranged at a distance from the web material (11) and is designed to be movable in the longitudinal direction of the web material (11).

2. The web observation system according to claim 1, **characterized in that** the background is movable at a similar or the same speed as the web material (11).

3. The web observation system according to any of the preceding claims, **characterized in that** the background is designed as a homogeneous surface and/or is homogeneously colored, preferably in white color.

4. The web observation system according to claim 1, **characterized in that** the background has a structured surface.

5. The web observation system according to any of the preceding claims, **characterized in that** the background has a surface which is closed in the direction of movement (12), preferably a revolving or rotatable surface.

6. The web observation system according to any of the preceding claims, **characterized in that** the surface of a background roller (15), in particular a cylindrical background roller, is provided as a background.

7. The web observation system according to any of the preceding claims, **characterized in that** a drive unit is provided for moving the background.

8. The web observation system according to any of the preceding claims, **characterized in that** the movement of the background is coupled with the movement of the web material (11), preferably in the form of a mechanical coupling, such as in particular a belt coupling or a belt drive (19), or in the form of a controllable separate motor drive, wherein preferably the web speed of the background is adapted to the web speed of the web material (11), preferably at least nearly coincides therewith.

9. The web observation system according to any of the preceding claims, **characterized in that** the illumination system comprises a light source (21) for incident light (22), which is arranged to illuminate the web material (11).

10. The web observation system according to any of the preceding claims, **characterized in that** the background is patterned or colored with reference color areas, preferably formed with predefined patterns, in particular for calibration purposes.

11. The web observation system according to any of the preceding claims, **characterized in that** the background, in particular the background roller, is spaced from the web material (11) with a small gap dimension, in particular with a gap dimension of less than 10 mm, further preferred less than 1 mm, particularly preferred approximately between 0.3 mm and 0.5 mm.

12. A method for web observation for a transparent or partially transparent web material (11) passing through, by means of continuous or quasi-continuous optical detection, the web material (11) moved relative to the camera (14) being optically detected by means of at least one camera (14), preferably a line scan camera, and the web material (11) being detected for calibratable optical detection in front of a defined background located at a distance from the web material (11), wherein the background is moved in the longitudinal direction of the web material (11).

13. The method for web observation according to claim 12, **characterized in that** the speed and/or direction of movement of the background is adapted to the speed and/or direction of movement of the web material (11), preferably coupled to it or synchronized with it.

14. The method for web observation according to claim 12 or 13, **characterized in that** the background, which is formed as a closed surface, preferably as a cylindrical surface, is moved together with the web material (11), and/or **in that** a cylindrical background roller (15) as the background is rotated about its longitudinal axis.

15. The method for web observation according to any one of claims 12 to 14, **characterized in that** the background, preferably the background roller, is moved along by the web material (11), in particular via a mechanical coupling, preferably a belt coupling or a belt drive (19), with a drive roller (17) moved along by the web material (11) or a motor drive synchronized with the web material (11).

## Revendications

1. Système de surveillance de bande pour la saisie optique continue ou quasi-continue d'un matériau en bande (11) transparent ou partiellement transparent en passage continu, sachant qu'au moins une caméra (14), de préférence une caméra linéaire, sert à la saisie optique par sections du matériau en bande (11) mis en mouvement par rapport à la caméra et sachant que le matériau en bande (11) est disposé devant un arrière-plan défini pour la saisie optique calibrée, sachant que l'arrière-plan est disposé à distance du matériau en bande (11) et est constitué de manière mobile en direction longitudinale du matériau en bande (11).

2. Système de surveillance de bande selon la revendication 1, **caractérisé en ce que** l'arrière-plan est mobile à vitesse similaire ou à la même vitesse que le matériau en bande (11).

3. Système de surveillance de bande selon l'une des revendications précédentes, **caractérisé en ce que** l'arrière-plan est constitué comme surface homogène et/ou est coloré de manière homogène, de préférende de couleur blanche.

4. Système de surveillance de bande selon la revendication 1, **caractérisé en ce que** l'arrière-plan présente une surface structurée.

5. Système de surveillance de bande selon l'une des revendications précédentes, **caractérisé en ce que** l'arrière-plan présente une surface fermée en direction de mouvement (12), de préférence une surface périphérique ou rotative.

6. Système de surveillance de bande selon l'une des revendications précédentes, **caractérisé en ce que** la surface d'un rouleau d'arrière-plan (15), en particulier d'un rouleau d'arrière-plan cylindrique, est prévu comme arrière-plan.

7. Système de surveillance de bande selon l'une des revendications précédentes, **caractérisé en ce qu'**un dispositif d'entraînement est prévu pour le mouvement de l'arrière-plan.

8. Système de surveillance de bande selon l'une des revendications précédentes, **caractérisé en ce qu'**un couplage du mouvement de l'arrière-plan avec le mouvement du matériau en bande (11) est prévu, de préférence sous forme d'un couplage mécanique, comme en particulier d'un couplage à courroie ou d'un mécanisme à courroie (19), ou sous forme d'un entraînement à moteur distinct commandable, sachant que de préférence la vitesse de bande de l'arrière-plan est adaptée à la vitesse de bande du matériau en bande (11), de préférence coïncide au moins approximativement avec celle-ci.

9. Système de surveillance de bande selon l'une des revendications précédentes, **caractérisé en ce que** le système d'éclairage présente une source de lumière (21) pour une lumière incidente (22), laquelle est disposée pour éclairer le matériau en bande (11).

10. Système de surveillance de bande selon l'une des revendications précédentes, **caractérisé en ce que** l'arrière-plan, en particulier à des fins de calibrage, est à motif ou coloré avec des surfaces de couleur de référence, de préférence constitué avec des motifs prédéfinis.

11. Système de surveillance de bande selon l'une des revendications précédentes, **caractérisé en ce que** l'arrière-plan, en particulier le rouleau d'arrière-plan, est espacé du matériau en bande (11) avec une faible cote d'écartement, en particulier avec une cote d'écartement de moins de 10 mm, de manière plus préférentielle de moins de 1 mm, de manière particulièrement préférentielle compris environ entre 0,3 mm et 0,5 mm.

12. Procédé de surveillance de bande d'un matériau en bande (11) transparent ou partiellement transparent en passage continu par saisie optique continue ou quasi-continue, sachant que moyennant au moins une caméra (14), de préférence une caméra linéaire, le matériau en bande (11) mis en mouvement par rapport à la caméra (14) est saisi optiquement et sachant que le matériau en bande (11) est saisi devant un arrière-plan défini et se trouvant à une distance du matériau en bande (11) pour la saisie optique calibrable, sachant que l'arrière-plan est mis en mouvement en direction longitudinale du matériau en bande (11).

13. Procédé de surveillance de bande selon la revendication 12, **caractérisé en ce que** la vitesse et/ou direction de mouvement de l'arrière-plan est adaptée à la vitesse et/ou direction de mouvement du matériau en bande (11), de préférence couplée à celle-ci ou synchronisée avec celle-ci.

14. Procédé de surveillance de bande selon la revendication 12 ou 13, **caractérisé en ce que** l'arrière-plan constitué comme surface fermée, de préférence comme surface de cylindre, est mis en mouvement conjointement avec le matériau en bande (11), et/ou **en ce que**, comme arrière-plan, un rouleau d'arrière-plan (15) en forme de cylindre est mis en rotation antour de son axe longitudinal.

15. Procédé de surveillance de bande selon l'une des revendications 12 à 14, **caractérisé en ce que** l'arrière-plan, de préférence le rouleau d'arrière-plan, est mis en mouvement conjointement par le matériau en bande (11), en particulier via un couplage mécanique, de préférence un couplage à courroie ou un mécanisme à courroie (19), avec un rouleau d'entraînement (17) mis en mouvement conjointement par le matériau en bande (17) ou un entraînement à moteur synchronisé avec le matériau en bande (11).
